# FASCICULE DE BREVET EUROPEEN

(11) **EP 1 996 824 B1**
(45) Date de publication et mention de la délivrance du brevet: **08.09.2010**
(21) Numéro de dépôt: 07731768.3
(22) Date de dépôt: 19.03.2007
(51) Int. Cl.: F16C 11/12, F16D 3/00

(54) **PIVOT A LIAISONS FLEXIBLES ET SON PROCEDE DE FABRICATION**
GELENK MIT FLEXIBLEN VERBINDUNGEN UND HERSTELLUNGSVERFAHREN DAFÜR
PIVOT WITH FLEXIBLE CONNECTIONS AND METHOD OF PRODUCING IT

(30) Priorité: 17.03.2006 FR 0602392
(43) Date de publication de la demande: 03.12.2008
(73) Titulaire: Centre National d'Etudes Spatiales ( C.N.E.S.), 75001 Paris (FR); Clix Industries, 31520 Ramonville Saint Agne (FR)
(72) Inventeur: CASTERAS, Christophe, René, Jacques, Marie, F-31400 Toulouse (FR); MARTIN, Frédéric, F-31770 Colomiers (FR)
(74) Mandataire: Colas, Jean-Pierre
(86) Numéro de dépôt international: PCT/FR2007/050953
(87) Numéro de publication internationale: WO 2007/113421

(56) Documents cités:
- FR-A1- 2 797 923
- JP-A- 62 288 718
- US-A- 4 997 123

## Description

La présente invention est relative à un pivot à liaisons flexibles comprenant des première et deuxième pièces mobiles en rotation d'angle limité l'une par rapport à l'autre autour d'un axe commun, contre l'action d'au moins une lame de ressort de rappel présentant des premier et deuxième talons ancrés dans lesdites première et deuxième pièces, respectivement.

Des pivots de ce type sont utilisés dans de nombreuses applications où un appareil ou organe est monté de manière à être mobile en rotation sans frottement dans un angle de faible ouverture, sous force de rappel. A titre d'exemple de tels appareils ou organes on peut citer des aiguilles indicatrices d'instruments de mesure, des miroirs oscillants, des plateaux de balances, etc....

Le brevet français n° 2 797 923 aux noms du Centre National d'Etudes Spatiales et de BE System Etudes et Réalisations décrit un tel pivot dans lequel chacune des deux pièces identiques, partiellement engagées l'une dans l'autre est formée de première et deuxième parties disposées dans le prolongement l'une de l'autre, sur un même axe. La première partie présente une surface extérieure cylindrique de révolution et elle est creusée d'un évidement sensiblement hémi-cylindrique. La deuxième partie prend la forme d'un pied de forme extérieure sensiblement hémi-cylindrique. Les pièces sont glissées axialement l'une dans l'autre de manière que le pied de l'une soit logé dans l'évidement sensiblement hémi-cylindrique de l'autre. Le pied et l'évidement sont dimensionnés de manière à autoriser des rotations relatives des deux pièces, d'angle limité.

Deux lames de ressort dont les plans se croisent sur l'axe commun des deux pièces assemblent élastiquement celles-ci pour développer un couple de rappel lorsque la position angulaire relative de ces pièces autour de leur axe commun s'écarte d'une position d'équilibre. Chacune des lames présente des première et deuxième extrémités ancrées par coincement dans les première et deuxième pièces du pivot, respectivement. Ce coincement est assuré par des goupilles forcées dans des logements prévus dans ces pièces.

Un tel ancrage par coincement est avantageux en ce qu'il n'altère pas les caractéristiques mécaniques des lames, contrairement à une fixation classique par soudure ou brasure.

On a cependant observé que l'ancrage par coincement, pour être efficace, doit sensiblement déformer les pièces qui reçoivent les lames. Cela peut modifier défavorablement la géométrie d'interface des pièces, la position des plans d'appui des lames et finalement altérer la coaxialité des pièces. Du fait de la précision requise pour le positionnement et l'usinage des logements qui reçoivent les goupilles, il est en outre difficile de garantir la valeur de l'effort de serrage des lames par coincement.

On a aussi proposé d'assurer la solidarisation des lames flexibles et des pièces qu'elles assemblent par engagement d'un talon de la lame dans une rainure formée dans la pièce et collage de ce talon dans cette rainure. Cependant, les géométries de rainure connues pèchent notamment par défaut d'étanchéité vis-à-vis du produit adhésif initialement fluide utilisé pour l'opération de collage, par défaut de guidage des lames ou encore par un collage unilatéral insuffisant de la lame.

La présente invention a donc pour but de réaliser un pivot à lames flexibles non affecté des limitations ou inconvénients mentionnés ci-dessus.

On atteint ce but de l'invention, ainsi que d'autres qui apparaîtront à la lecture de la description qui va suivre, avec un pivot à liaisons flexibles comprenant au moins des première et deuxième pièces mobiles en rotation selon un angle limité l'une par rapport à l'autre autour d'un axe commun, contre l'action d'au moins une lame de ressort de rappel présentant des premier et deuxième talons ancrés dans des logements formés dans lesdites première et deuxième pièces respectivement, ce pivot étant remarquable en ce qu'au moins un desdits logements comprend des moyens de guidage du talon associé, propres à maintenir ledit talon à l'écart de parois adjacentes dudit logement, en définissant ainsi deux canaux parallèles disposés de part et d'autre dudit talon, ledit talon étant noyé dans un produit adhésif durci coulé à l'état fluide dans lesdits canaux.

Comme on le verra plus loin en détail, un tel assemblage du talon à la pièce permet de respecter parfaitement la géométrie de la pièce, et celle de son assemblage avec l'autre pièce du pivot, tout en supprimant les inconvénients mentionnés ci-dessus des liaisons par collage ou coincement connues.

Selon d'autres caractéristiques, optionnelles, de la présente invention :
- lesdites pièces sont au nombre de deux et lesdites première et deuxième pièces sont identiques,
- le pivot selon l'invention comprend une troisième pièce montée coaxialement auxdites première et deuxième pièces et fixe par rapport à ladite première pièce, ladite troisième pièce comportant des logements dans lesquels lesdits talons de ladite lame de ressort de rappel sont ancrés,
- au moins un desdits logements de ladite troisième pièce comprend des moyens de guidage du talon associé, propres à maintenir ledit talon à l'écart de parois adjacentes dudit logement, en définissant ainsi deux canaux parallèles disposés de part et d'autre dudit talon, ledit talon étant noyé dans un produit adhésif,
- les moyens de guidage comprennent une fente raccordant le logement à une surface cylindrique interne d'axe (X) de la pièce, la fente étant traversée par le talon et présentant une largeur sensiblement égale à l'épaisseur du talon,
- les moyens de guidage comprennent en outre une rainure creusée dans une paroi du logement, en regard de la fente, pour accueillir et guider une bordure d'extrémité du talon,
- les canaux sont symétriques par rapport au plan moyen du talon et présentent une profondeur constante,
- le logement est formé dans une pièce s'étendant axialement entre deux bases et les canaux débouchent sur au moins une des bases,
- le produit adhésif est choisi dans le groupe formé par : les résines époxy, les résines acryliques et les résines polyuréthane,
- le pivot comprend deux lames conformées en "H" et en "O" respectivement, de manière à pouvoir être passées l'une dans l'autre selon deux plans sécants définissant l'axe (X) du pivot, une des branches de la lame en "H" étant raccourcie pour faciliter son insertion dans la lame en "O",
- les pièces étant identiques et au nombre de deux, comportent chacune une partie mâle et une partie femelle adjacentes de manière à pouvoir être engagées coaxialement tête-bêche l'une dans l'autre,
- la partie mâle de l'une quelconque des pièces et la partie femelle de l'autre pièce comportent des surfaces de butée complémentaires délimitant le débattement angulaire maximum des deux pièces l'une par rapport à l'autre.

L'invention fournit aussi un procédé de fabrication du pivot suivant lequel, pour ancrer un talon de lame dans le logement associé, on insère le talon dans le logement et on coule ensuite un produit adhésif fluide durcissable dans les canaux du logement de manière à noyer ainsi le talon dans le produit adhésif.

L'invention concerne également un enchaînement d'au moins deux pivots selon l'invention.

D'autres caractéristiques et avantages de la présente invention apparaîtront à la lecture de la description qui va suivre et à l'examen du dessin annexé dans lequel :
- la figure 1 est une vue perspective d'un mode de réalisation préféré d'un pivot suivant la présente invention,
- la figure 2 est une vue perspective d'une des deux pièces, ou manchons, identiques constituant, avec deux lames flexibles d'assemblage également visibles sur cette figure, le pivot de la figure 1,
- la figure 3 représente, en vue perspective, ces deux lames dégagées des manchons, dans leur position relative d'équilibre,
- les figures 4 et 5 sont des vues en élévation de ces deux lames,
- la figure 6 est une vue en plan agrandie du détail A de la figure 1,
- la figure 7 est une vue perspective avec arrachement partiel d'un second mode de réalisation du pivot selon l'invention, révélant sa structure interne.

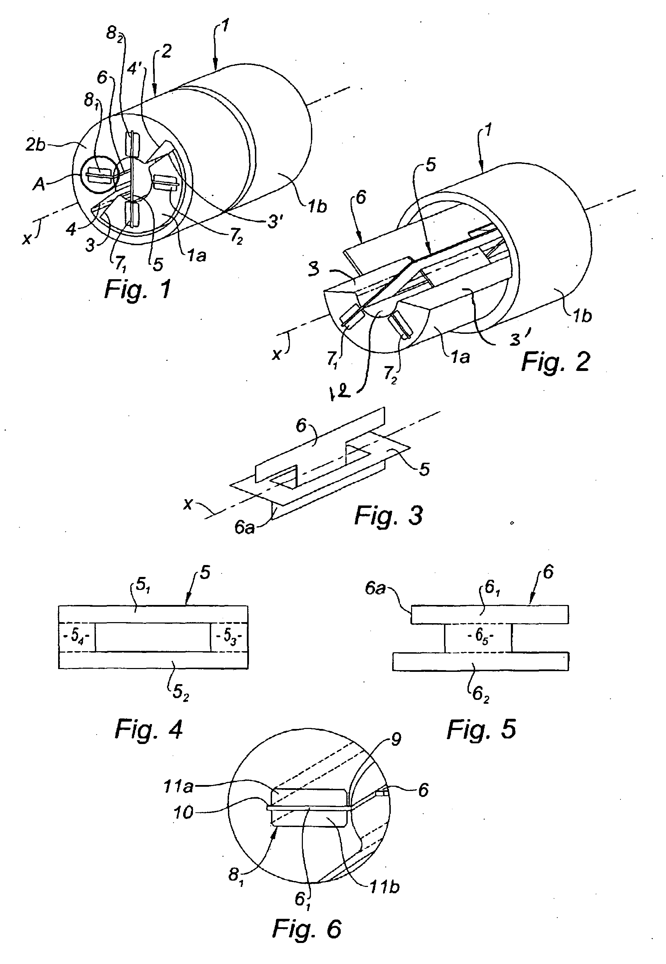

On se réfère maintenant aux figures 1 à 6 du dessin annexé pour décrire la structure d'un premier mode de réalisation d'un pivot suivant la présente invention. Celui-ci comprend deux pièces, ou manchons, identiques 1, 2 conformées chacune comme celle représentée à la figure 2, ces deux pièces étant engagées coaxialement tête-bêche l'une dans l'autre suivant un axe commun X, comme représenté à la figure 1. Un tel agencement est connu du brevet cité en préambule de la présente description.

Comme cela apparaît sur la figure 2, la pièce 1 comprend deux parties 1a et 1b agencées coaxialement côte-à-côte, ces parties étant dites mâle et femelle respectivement, pour une raison qui apparaîtra dans la suite. La partie mâle 1a est sensiblement hémicylindrique d'axe X alors que la partie 1b présente une surface extérieure cylindrique de révolution, coaxiale à la surface externe de la partie hémicylindrique 1a. La partie 1b est aussi creusée d'un évidement sensiblement hémicylindrique dimensionné pour accueillir la partie mâle 2a de la pièce 2 (cachée dans la partie 1b de la pièce 1 sur la vue de la figure 1), avec un jeu angulaire maximum limité.

Celui-ci est défini par la mise en contact de surfaces de butée planes et axiales formées sur la partie mâle d'une des deux pièces, avec des surfaces de butée associées formées dans l'évidement de l'autre pièce qui reçoit cette partie mâle. Sur la figure 1 on voit ainsi les surfaces de butée 3, 3' formées sur la partie mâle 1a de la pièce 1 et les surfaces de butée 4, 4' formées dans l'évidement de la partie 2b de la pièce 2. Les mises en butée des surfaces 3 et 3', ou 4 et 4', définissent les limites des rotations relatives des pièces 1 et 2, et donc l'amplitude du débattement angulaire maximum de ces deux pièces. Un choix approprié de l'angle des surfaces 3, 3' d'une part, 4, 4' d'autre part, permet de régler cette amplitude à une valeur prédéterminée. Toutes ces dispositions sont connues du brevet précité, auquel on pourra se reporter pour plus de détail sur celles-ci.

Toujours de manière connue, la rotation d'une pièce par rapport à l'autre se fait sous force de rappel. Celle-ci est exercée par deux lames de ressort 5 et 6 qui couplent les deux pièces 1 et 2 et qui peuvent prendre les formes générales d'un "O" et d'un "H", comme représenté sur les vues en plan des figures 4 et 5. Ces formes permettent de passer la lame 6 dans l'évidement de la lame 5, comme le montre la figure 3 qui représente l'agencement relatif des lames, au repos, entre les pièces 1 et 2. On remarquera le raccourcissement de la branche 6a de la lame 6, conçu pour faciliter le passage de cette lame dans la lame 5.

Comme on le verra plus loin, ces lames présentent des parties actives en flexion autour de l'axe X du pivot suivant l'invention, délimitées par des traits interrompus sur les figures 4 et 5. Les parties actives de ces lames 5 et 6, coupées par l'axe X, sont repérées 5₃ et 5₄ sur la figure 4, 6₃ sur la figure 5, respectivement. Les parties 5₁, 5₂ de la lame 5 et les parties 6₁, 6₂ de la lame 6, qui sont parallèles et écartées de l'axe X, constituent des talons conçus pour être ancrés dans des logements 7₁,7₂ et 8₁,8₂ formés dans les pièces 1 et 2 respectivement, comme représenté aux figures 1 et 2. Ces logements prennent la forme de rainures qui s'étendent sur toute la longueur axiale des pièces 1 et 2 et qui débouchent sur les deux bases distantes axialement de chaque pièce. Elles s'étendent aussi radialement dans ces pièces sur une profondeur sensiblement égale à la largeur des talons qu'elles accueillent.

C'est ainsi que les talons 5₁ et 5₂ de la lame 5 sont ancrés dans les logements 7₁ et 8₂ des pièces 1 et 2 respectivement, alors que les talons 6₁ et 6₂ de la lame 6 sont ancrés dans des logements 7₂ et 8₁ de ces pièces 1 et 2, respectivement.

Comme représenté aux figures 2 et 3, en l'absence de toute sollicitation, les plans des lames 5 et 6 sont sécants, avantageusement perpendiculaires, selon l'axe X. On comprend que l'application d'un couple d'axe X entre les pièces 1 et 2, tendant à faire tourner l'une de celles-ci par rapport à l'autre, provoque le fléchissement des deux lames et donc l'apparition d'un couple de rappel des deux pièces à leur position relative d'origine.

L'ajustement de la concentricité des pièces 1 et 2, et la conservation de cette concentricité lors des flexions des lames de ressort, sont évidemment essentielles lorsque le pivot suivant l'invention est intégré à un mécanisme de précision, comme c'est le cas par exemple quand ce pivot supporte un miroir tournant faisant partie d'un appareil de mesures interférométriques. L'axe X du pivot n'étant défini que géométriquement, par l'intersection des plans moyens des lames 5 et 6, on comprend que la précision de l'alignement des pièces 1 et 2 dépend étroitement de la précision du positionnement des lames dans les logements des pièces 1 et 2 dans lesquelles elles sont ancrées. La présente invention a notamment pour but de fournir des moyens permettant d'obtenir un alignement de haute précision des pièces 1 et 2, satisfaisant aux standards en vigueur dans les industries de pointe telles que les industries spatiales par exemple.

On se réfère à la figure 6 du dessin annexé, qui est une vue agrandie du détail A de la figure 1, pour décrire les caractéristiques des logements des talons des lames du pivot suivant la présente invention. Sur cette vue apparaît clairement la géométrie du débouché du logement 8₁ d'un talon de la lame 6 sur une base de la pièce 2. Cette géométrie est conforme à celle de la section droite courante de ce logement ainsi, avantageusement, qu'à celle des autres logements.

Sur cette vue il apparaît que cette section droite du logement est de forme généralement rectangulaire, centrée sur un rayon de la partie cylindrique 2b de la pièce 2.

Suivant une caractéristique de la présente invention, le logement 8₁ comprend des moyens de guidage 9,10 du talon 6₁ qu'il reçoit, agencés sur le rayon sur lequel il est centré de manière à maintenir ce talon sur ce rayon, sensiblement à égales distances des parois du logement qui sont parallèles au talon. Le talon 6₁ sépare ainsi dans le logement 8₁ deux canaux parallèles 11a et 11b propres à être comblés par un produit adhésif durci, comme on le verra plus loin. On remarquera que ces canaux sont symétriques par rapport au talon et présentent une profondeur constante.

Ces moyens de guidage comprennent une fente 9 s'étendant dans la pièce 2 sur toute la longueur du logement 8₁ pour faire déboucher ce dernier sur une surface cylindrique interne 12 de la pièce 2 et autoriser ainsi l'insertion du talon 6₁ dans le logement 8₁ pendant l'assemblage du pivot suivant l'invention, comme on le verra plus loin. La largeur de cette fente 9 est sensiblement égale à l'épaisseur de la lame 6, en fait légèrement supérieure, de manière à permettre l'insertion sans contrainte du talon de la lame 6 dans le logement 8₁, à travers la fente. En outre, le léger jeu ainsi présent entre le talon et la fente permet de positionner précisément ce talon dans son logement pendant les opérations d'assemblage du pivot, de manière à obtenir un alignement parfait des deux pièces du pivot.

Le guidage et le maintien du talon dans ce plan médian est assuré, d'une part, par cette fente et, d'autre part, par la présence en fond de logement d'une rainure de guidage 10 elle aussi centrée dans le plan médian du logement 8₁. Cette rainure est creusée dans ce fond pour accueillir la bordure d'extrémité du talon 6₁ en fin d'insertion de celui-ci dans le logement 8₁. La rainure 10 est de largeur sensiblement égale à celle de la fente 9 pour les raisons données ci-dessus.

On comprend que les fentes et rainures des logements des talons des lames du pivot suivant l'invention permettent de disposer très précisément ces lames sur les pièces qu'elles couplent, et donc d'obtenir un parfait alignement de ces pièces sur un même axe pendant les opérations d'assemblage du pivot.

Pour réaliser cet assemblage on engage les lames 5, 6 dans les logements correspondants des deux pièces 1, 2 du pivot, montées tête-bêche l'une dans l'autre. A l'aide de moyens de montage appropriés, on règle finement les positions des lames et des pièces de manière à obtenir une parfaite coaxialité de ces dernières. On coule ensuite un produit adhésif à l'état fluide dans les canaux délimités dans ces logements, par des extrémités ouvertes de ces canaux, en veillant à combler ceux-ci. L'étanchéité des canaux au niveau de la fente 9 est assurée par l'étroitesse du jeu (quelques centièmes de mm) demeurant entre le talon de lame passé dans cette fente et les bords de celle-ci ainsi que par la viscosité du produit adhésif à l'état fluide. Le durcissement de ce produit assure la fixation définitive des lames dans les logements qui accueillent leurs talons.

De nombreux matériaux pourront être utilisés pour réaliser le pivot suivant l'invention en fonction de sa destination, au choix du concepteur. A titre d'exemple illustratif et non limitatif seulement, on décrit dans la suite un mode de réalisation de ce pivot plus particulièrement conçu pour être utilisé dans une ambiance spatiale, au sein d'un instrument de mesure comportant un organe soumis à des oscillations angulaires de fréquence élevée, comme c'est le cas d'un miroir oscillant dans l'application interférométrique évoquée plus haut.

Les pièces, ou manchons, 1 et 2 sont réalisées en un matériau tel qu'un acier, rigide et résistant afin de limiter ses déformations et d'offrir une bonne tenue sous sollicitations. Son coefficient de dilatation thermique est avantageusement proche de celui du matériau constituant les lames de ressort afin de limiter les contraintes thermiques subies, notamment dans l'espace. Ce matériau est de préférence susceptible d'être découpé par électroérosion au fil pour l'usinage de la pièce.

Les lames sont avantageusement réalisées en un acier inoxydable, trempé et vieilli, ou en un alliage de cuivre et de béryllium de manière à présenter l'élasticité requise ainsi qu'une bonne résistance à la fatigue propre à garantir une durée de vie suffisante au pivot. Son module d'élasticité doit être élevé pour donner aux lames une grande résistance au flambage, pour une épaisseur de lame déterminée.

Bien entendu d'autres matériaux convenables, plastiques ou composites pourront être sélectionnés, au choix du concepteur.

Le produit adhésif utilisé est une colle structurale thermodurcissable telle qu'une résine polyuréthane, époxy ou acrylique. Dans l'application spatiale mentionnée plus haut, elle sera choisie dans les " listes spatiales" éditées par l'ESA ou la NASA, de préférence parmi les résines époxy listées, à faible taux de dégazage et résistantes à une température absolue de 4°K.

On remarquera à cet égard que la géométrie des canaux 11a et 11b assurent aux cordons de colle reçus dans ces canaux une épaisseur constante et calibrée. Il est alors aisé de calculer précisément les dimensions de ces canaux qui sont propres à donner à la colle durcie une résistance au cisaillement assurant une résistance à l'arrachement des lames fixée par un cahier des charges.

On a pu ainsi réaliser, pour une application spatiale, un pivot d'une longueur axiale de l'ordre de 20 mm et d'un diamètre de l'ordre de 10 mm. Les lames de ressort présentent une épaisseur de l'ordre de 0,1 mm, pour une distance entre appuis (soit entre talons) de 3 à 4 mm, ces dimensions étant fixées par la raideur de torsion imposée par le cahier des charges et par la tenue au flambage sous des torseurs d'efforts spécifiés dans ce cahier. Le jeu laissé entre les lames et les moyens de guidage 9, 10 est de quelques centièmes de mm.

Les parties actives, ou poutres, des lames, sont respectivement d'une largeur de 4mm pour les parties 5₃, 5₄ de la lame 5, et d'une largeur double pour la partie 6₅ de la poutre 6.

Les talons sont d'une largeur de l'ordre de 2 à 3 mm, correspondant à la profondeur des logements qui les reçoivent. Cette largeur est fonction de la contrainte de cisaillement maximale qui doit être supportée par les cordons de colle contenus dans les canaux 11a et 11b et des torseurs d'efforts subis.

Il apparaît maintenant que l'invention permet d'atteindre le but annoncé, à savoir réaliser un pivot à liaisons flexibles du type décrit en préambule de la présente description, dans lequel les deux pièces couplées par les lames de ressort sont alignées avec une grande précision, et ceci grâce aux moyens prévus pour guider ces lames ainsi qu'au léger jeu qui permet d'affiner la position de ces lames dans ces moyens avant la fixation par collage des lames du pivot suivant l'invention.

On observera que l'assemblage du pivot est réalisé sans que les pièces 1, 2 n'aient à supporter des efforts susceptibles de les déformer, au détriment de la qualité de leur alignement. Les tolérances d'alignement de ces pièces ne dépendent que de la précision de l'outillage utilisé pour les assembler.

On observera encore que l'encombrement réduit des logements des talons des lames permet de minimiser le diamètre du pivot et donc aussi sa masse. Egalement, la maîtrise dont on dispose de l'épaisseur des cordons de colle permet de fiabiliser la résistance des assemblages des lames de ressort et des pièces.

On remarquera encore que le pivot selon ce premier mode de réalisation est de structure particulièrement simple, ne comptant que quatre éléments.

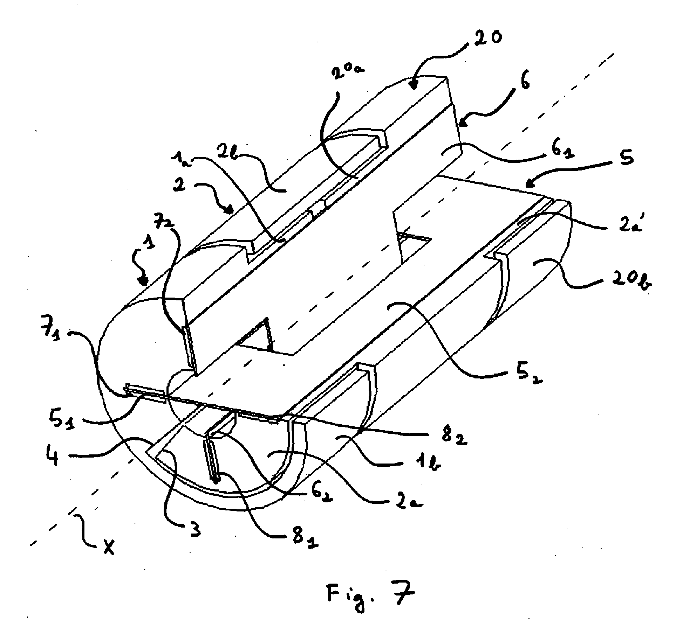

On a représenté à la figure 7 du dessin annexé une variante du pivot selon l'invention. Sur cette figure, des références numériques identiques, éventuellement affectées d'un « prime », à celles utilisées sur les figures 1 à 6 repèrent des éléments ou organes identiques ou de fonctions analogues.

Le pivot de la figure 7 se distingue de celui de la figure 1 essentiellement en ce qu'il comporte deux pièces 1, 20, de structure sensiblement identique à la pièce décrite en regard de la figure 2, montées coaxiale ment et de manière que les parties mâles 1a, 20a respectives des deux pièces 1, 20 sont en vis-à-vis. Ces deux pièces 1, 20 forment les extrémités du pivot de la figure 7. Le pivot comporte en outre une pièce médiane 2 montée coaxialement aux pièces 1, 20.

La pièce 1, montée à l'une des extrémités du pivot, comprend une partie mâle 1a et une partie femelle 1b agencées coaxialement côte-à-côte. La partie mâle 1a est sensiblement hémicylindrique d'axe X alors que la partie femelle 1b présente une surface extérieure cylindrique de révolution, coaxiale à la surface externe de la partie hémicylindrique 1a. La partie femelle 1b est aussi creusée d'un évidement sensiblement hémicylindrique.

De même, la pièce 20, montée à l'extrémité opposée à la pièce 1, comprend une partie mâle 20a et une partie femelle 20b agencées coaxialement côte-à-côte. La partie mâle 20a est sensiblement hémicylindrique d'axe X alors que la partie femelle 20b présente une surface extérieure cylindrique de révolution, coaxiale à la surface externe de la partie hémicylindrique 20a. La partie femelle 20b est aussi creusée d'un évidement sensiblement hémicylindrique.

La pièce médiane 2 comprend une partie femelle 2b sensiblement centrale présentant une surface extérieure cylindrique de révolution creusée d'un évidement sensiblement hémicylindrique dimensionné pour accueillir simultanément les parties mâles 1a et 20a, des pièces 1 et 20. La pièce médiane 2 comporte également, deux parties mâles 2a et 2a', réalisées de part et d'autre dans le prolongement axial de la partie femelle 2b. Les parties mâles 2a, 2a' sont sensiblement hémicylindriques d'axe X et dimensionnées pour pouvoir être insérées dans l'évidement de la partie femelle de la pièce 1, respectivement de la pièce 20, du pivot avec un jeu angulaire maximum limité.

Ce jeu angulaire maximum limité est défini par la mise en contact de surfaces de butée planes et axiales formées sur les parties mâles 2a, 2a' de la pièce médiane 2; avec des surfaces de butée associées formées dans l'évidement des pièces 1 et 20 qui reçoivent ces parties mâles 2a et 2a'.

En particulier, on voit sur la figure 7 la surface de butée 3 formée sur la partie mâle 2a de la pièce médiane 2 et la surface de butée 4 formée dans l'évidement de la partie femelle 1b de la pièce 1. La mise en butée des surfaces 3 et 4, définit une limite de rotation relative des pièces 1 et 2, et donc de l'amplitude du débattement angulaire maximum de ces deux pièces.

Un choix approprié de l'angle de la surface 3 d'une part et 4 d'autre part, permet de régler cette amplitude à une valeur prédéterminée.

La rotation de la pièce médiane 2 par rapport aux pièces d'extrémité 1, 20 se fait sous force de rappel exercée par deux lames de ressort 5 et 6 qui couplent les trois pièces 1, 2, 20 et qui sont identiques aux lames de ressort mises en oeuvre dans le pivot selon le premier mode de réalisation de l'invention.

Ainsi, la lame 5 présente un premier talon 5₁ ancré dans le logement 7₁ de la pièce 1 et dans le logement de la pièce 20 qui est situé dans le prolongement axial de ce logement 7₁. Le deuxième talon 5₂ de cette lame 5 est quant à lui ancré dans le logement 8₂ de la pièce médiane 2.

De même, la lame 6 présente un premier talon 6₁ ancré dans le logement 7₂ de la pièce 1 et dans le logement de la pièce 20 qui est situé dans le prolongement axial de ce logement 7₂. Le deuxième talon 6₂ de cette lame 6 est quant à lui ancré dans le logement 8₁ de la pièce médiane 2.

Ces logements 7₁, 7₂, 8₁, 8₂ ménagés dans les trois pièces 1, 2, 20 prennent donc la forme de rainures qui s'étendent sur toute la longueur axiale des pièces d'extrémités 1, 20 et de la pièce médiane 2. Elles s'étendent également radialement dans ces pièces sur une profondeur sensiblement égale à la largeur du talon qu'elles accueillent.

Le pivot de la figure 7, est remarquable en ce que les logements 7₁, 7₂, 8₂, 8₁ ménagés dans les trois pièces 1, 2, 20 du pivot - c'est-à-dire les logements 7₁, 7₂ de la pièce 1, les logements de la pièce 20 situés dans le prolongement axial de ces logements 7₁, 7₂, et les logements 8₁, 8₂ de la pièce médiane 2 - comprennent chacun des moyens de guidage du talon des lames de ressort 5, 6 qui leur sont associés. Ces moyens de guidage sont propres à maintenir les talons à l'écart de parois adjacentes des logements, en définissant ainsi deux canaux parallèles disposés de part et d'autre des talons, qui sont noyés dans un produit adhésif durci coulé à l'état fluide dans les canaux.

Ainsi, les pièces d'extrémité 1 et 20 sont fixées l'une par rapport à l'autre par l'intermédiaire des lames 5 et 6 de ressort de rappel.

Par suite, la deuxième pièce 2 est mobile en rotation selon un angle limité par rapport aux première et troisième pièces 1, 20 autour de l'axe commun X, contre l'action desdites lames de ressort de rappel 5 et 6.

Comme décrit pour le premier mode de réalisation, de nombreux matériaux pourront être utilisés pour réaliser le pivot suivant l'invention en fonction de sa destination, au choix du concepteur, en particulier il pourra être conçu pour être utilisé dans une ambiance spatiale.

On remarquera que le pivot selon ce second mode de réalisation est de structure particulièrement simple, ne comptant que cinq éléments.

On remarquera encore que le pivot selon ce second mode de réalisation permet une utilisation avec les pièces d'extrémité fixes et la pièce médiane mobile en rotation selon un angle limité ou, inversement, avec la pièce médiane fixe et les pièces d'extrémité mobiles en rotation selon un angle limité.

L'invention porte aussi sur un enchaînement de pivots selon l'invention. En particulier, au moins deux pivots selon l'invention peuvent être associés en série. Avantageusement, l'enchaînement de pivots selon l'invention permet de cumuler les propriétés des pivots.

Bien entendu, la présente invention n'est pas limitée aux modes réalisations décrits et représentés, qui n'ont été donnés qu'à titre d'exemple. C'est ainsi que l'invention est évidemment applicable à des pivots d'autres types connus, dans lesquels les pièces assemblées par les lames de ressort ne sont pas conformées pour être emmanchées l'une dans l'autre tête-bêche, ou encore dans lesquels les lames de ressort sont de géométries et/ou en nombre différents.

## Revendications

1. Pivot à liaisons flexibles comprenant au moins des première (1) et deuxième (2) pièces mobiles en rotation selon un angle limité l'une par rapport à l'autre autour d'un axe commun (X), contre l'action d'au moins une lame (5,6) de ressort de rappel présentant des premier (5₁,6₁) et deuxième (5₂,6₂) talons ancrés dans des logements (7₁, 7₂ ; 8₂, 8₁) formés dans lesdites première (1) et deuxième (2) pièces respectivement, **caractérisé en ce qu'**au moins un desdits logements (7₁, 7₂ ; 8₂, 8₁) comprend des moyens de guidage (9, 10) du talon associé, propres à maintenir ledit talon à l'écart de parois adjacentes dudit logement (7₁, 7₂ ; 8₂, 8₁), en définissant ainsi deux canaux parallèles (11a, 11b) disposés de part et d'autre dudit talon, ledit talon étant noyé dans un produit adhésif durci coulé à l'état fluide dans lesdits canaux (11a, 11b).

2. Pivot conforme à la revendication 1, **caractérisé en ce que** lesdites pièces sont au nombre de deux et lesdites première (1) et deuxième (2) pièces sont identiques.

3. Pivot conforme à la revendication 1, **caractérisé en ce qu'**il comprend une troisième pièce (20) montée coaxialement auxdites première (1) et deuxième (2) pièces et fixe par rapport à ladite première pièce (1), ladite troisième pièce (20) comportant au moins un logement dans lequel est ancré ledit premier talon (5₁, 6₁) de ladite lame de ressort de rappel (5, 6).

4. Pivot conforme à la revendication 3, **caractérisé en ce que** ledit logement de ladite troisième pièce (20) comprend des moyens de guidage du talon associé, propres à maintenir ledit talon à l'écart de parois adjacentes dudit logement, en définissant ainsi deux canaux parallèles disposés de part et d'autre dudit talon, ledit talon étant noyé dans un produit adhésif.

5. Pivot conforme à l'une quelconque des revendications précédentes, **caractérisé en ce que** lesdits moyens de guidage comprennent une fente (9) raccordant ledit logement (7₁, 7₂ ; 8₂, 8₁) à une surface cylindrique interne (12) d'axe (X) de ladite pièce (1 ; 2 ; 20), ladite fente (9) étant traversée par ledit talon et présentant une largeur sensiblement égale à l'épaisseur dudit talon.

6. Pivot conforme à l'une quelconque des revendications précédentes, **caractérisé en ce que** lesdits moyens de guidage comprennent en outre une rainure (10) creusée dans une paroi dudit logement (7₁, 7₂ ; 8₂, 8₁), en regard de ladite fente (9), pour accueillir et guider une bordure d'extrémité dudit talon.

7. Pivot conforme à l'une quelconque des revendications précédentes, **caractérisé en ce que** lesdits canaux (11a, 11b) sont symétriques par rapport au plan moyen dudit talon et présentent une profondeur constante.

8. Pivot conforme à l'une quelconque des revendications précédentes, dans lequel ledit logement (7₁, 7₂ ; 8₂, 8₁) est formé dans une pièce (1 ; 2 ; 20) s'étendant axialement entre deux bases, **caractérisé en ce que** lesdits canaux (11a, 11b) débouchent sur au moins une desdites bases.

9. Pivot conforme à l'une quelconque des revendications précédentes, **caractérisé en ce que** le produit adhésif est choisi dans le groupe formé par : les résines époxy, les résines acryliques et les résines polyuréthane.

10. Pivot conforme à l'une quelconque des revendications précédentes, **caractérisé en ce qu'**il comprend deux lames conformées en "H" et en "O" respectivement, de manière à pouvoir être passées l'une dans l'autre selon deux plans sécants définissant ledit axe (X) du pivot, une des branches de la lame en "H" étant raccourcie pour faciliter son insertion dans la lame en "O".

11. Pivot conforme à l'une quelconque des revendications précédentes, la revendication 2 s'appliquant, **caractérisé en ce que** lesdites pièces (1; 2) comportent chacune une partie mâle (1a; 2a) et une partie femelle (1b; 2b) adjacentes de manière à pouvoir être engagées coaxialement tête-bêche l'une dans l'autre.

12. Pivot conforme à la revendication 11, **caractérisé en ce que** la partie mâle (1a; 1b) de l'une quelconque desdites pièces (1; 2) et la partie femelle (2a; 2b) de l'autre pièce comportent des surfaces de butée complémentaires (3, 4 ; 3', 4') délimitant le débattement angulaire maximum des deux pièces (1; 2) l'une par rapport à l'autre.

13. Pivot conforme à l'une quelconque des revendications précédentes, la revendication 3 s'appliquant, **caractérisé en ce que** la troisième pièce (20) est identique à la première pièce (1).

14. Procédé de fabrication du pivot conforme à l'une quelconque des revendications précédentes, **caractérisé en ce que**, pour ancrer un talon (5₁, 6₁ ; 5₂, 6₂) de lame dans le logement (7₁, 7₂ ; 8₂, 8₁) associé, on insère ledit talon dans ledit logement et on coule ensuite un produit adhésif fluide durcissable dans lesdits canaux (11a, 11b) de manière à noyer ainsi ledit talon dans ledit produit adhésif.

15. Dispositif comprenant un enchaînement d'au moins deux pivots conforment à l'une quelconque des revendications 1 à 13.

## Claims

1. Pivot with flexible linkages comprising at least first (1) and second (2) elements which are mobile in rotation at a limited angle relative to each other about a common axis (X), countering the action of at least one return spring plate having first (5₁, 6₁) and second (5₂, 6₂) heel elements anchored in housings (7₁, 7₂; 8₂, 8₁) formed in said first (1) and second (2) elements respectively, **characterised in that** at least one of said housings (7₁, 7₂; 8₂, 8₁) comprises guiding means (9, 10) of the associated heel element able to maintain said heel element away from adjacent walls of said housing (7₁, 7₂; 8₂, 8₁), thus defining two parallel channels (11a, 11b) disposed on either side of said heel element, said heel element being submerged in a hardened adhesive product poured in fluid state into said channels (11a, 11b).

2. Pivot according to claim 1, **characterised in that** there are two of said elements and the first (1) and second (2) elements are identical.

3. Pivot according to claim 1, **characterised in that** it comprises a third element (20) mounted coaxially with said first (1) and second (2) elements and fixed in relation to said first element (1), said third element (20) comprising at least one housing in which said first heel element (5₁, 6₁) of said return spring plate (5, 6) is anchored.

4. Pivot according to claim 3, **characterised in that** said housing of said third element (20) comprises guiding means of the associated heel element able to maintain said heel away from adjacent walls of said housing, thus defining two parallel channels disposed either side of said heel element, said heel element being submerged in an adhesive product.

5. Pivot according to any one of the preceding claims, **characterised in that** said guiding means comprise a slot (9) connecting said housing (7₁, 7₂; 8₂, 8₁) to an internal cylindrical surface (12) of axis (X) of said element (1; 2; 20), said slot (9) being crossed by said heel element and having a width substantially equal to the thickness of said heel element.

6. Pivot according to any one of the preceding claims, **characterised in that** said guiding means also comprise a groove (10) hollowed into a wall of said housing (7₁, 7₂; 8₂, 8₁) facing said slot (9) in order to receive and guide an end edge of said heel element.

7. Pivot according to any one of the preceding claims, **characterised in that** said channels (11a, 11b) are symmetrical in relation to the median plane of said heel element and have a constant depth.

8. Pivot according to any one of the preceding claims, in which said housing (7₁, 7₂; 8₂, 8₁) is formed in an element (1; 2; 20) extending axially between two bases, **characterised in that** said channels (11a, 11b) open out onto at least one of said bases.

9. Pivot according to any one of the preceding claims, **characterised in that** the adhesive product is chosen from the group formed by: epoxy resins, acrylic resins and polyurethane resins.

10. Pivot according to any one of the preceding claims, **characterised in that** it comprises two plates formed in an "H" shape and an "O" shape respectively in such a way that they can be passed into each other according to two secant planes defining said axis (X) of the pivot, one of the branches of the plate in an "H" shape being shortened in order to facilitate its insertion into the "O" shaped plate.

11. Pivot according to any one of the preceding claims, when dependent on claim 2, **characterised in that** said elements (1; 2) each comprise a male section (1a; 2a) and a female section (1b; 2b) which are adjacent in such a way as to be able to be engaged coaxially head to tail one inside the other.

12. Pivot according to claim 11, **characterised in that** the male section (1a; 1b) of any one of said elements (1; 2) and the female section (2a; 2b) of the other element comprise complementary abutment surfaces (3, 4; 3', 4') delimiting the maximum angular displacement of the two elements (1; 2) one in relation to the other.

13. Pivot according to any one of the preceding claims, when dependent on claim 3, **characterised in that** the third element (20) is identical to the first element (1).

14. Method for manufacturing the pivot according to any one of the preceding claims, **characterised in that** in order to anchor a heel element (5₁, 6₁; 5₂, 6₂) of a plate in the associated housing (7₁, 7₂; 8₂, 8₁) said heel element is inserted into said housing and a hardenable fluid adhesive product is then poured into said channels (11a; 11b) in such a way as to submerge said heel element in said adhesive product.

15. Device comprising a chain of at least two pivots according to any one of the claims 1 to 13.

## Patentansprüche

1. Zapfen mit biegsamen Verbindungen, der mindestens einen ersten (1) und einen zweiten (2) in Drehung gemäß einem beschränkten Winkel zueinander um eine gemeinsame Achse (X) gegen die Wirkungen mindestens einer Federklinge (5, 6) beweglichen Teil aufweist, die einen ersten (5₁, 6₁) und einen zweiten (5₂, 6₂) Ansatz aufweist, die in Aufnahmen (7₁, 7₂; 8₂, 8₁) verankert sind, die jeweils in dem ersten (1) und zweiten (2) Teil ausgebildet sind, **dadurch gekennzeichnet, dass** mindestens eine der Aufnahmen (7₁, 7₂,; 8₂, 8₁) Führungsmittel (9, 10) des dazugehörenden Absatzes aufweist, die den Absatz von den benachbarten Wänden der Aufnahme (7₁, 7₂; 8₂, 8₁) beabstandet halten können, indem daher zwei parallele Kanäle (11a, 11b) definiert werden, die zu beiden Seiten des Absatzes angeordnet sind, wobei der Absatz in ein ausgehärtetes Klebeprodukt eingelassen ist, das im flüssigen Zustand in die Kanäle (11a, 11b) gegossen wird.

2. Zapfen nach Anspruch 1, **dadurch gekennzeichnet, dass** es zwei Teile sind, und dass der erste (1) und der zweite (2) Teil identisch sind.

3. Zapfen nach Anspruch 1, **dadurch gekennzeichnet, dass** er einen dritten Teil (20) aufweist, der koaxial zu dem ersten (1) und zweiten (2) Teil installiert und in Bezug zu dem ersten Teil (1) stationär ist, wobei der dritte Teil (20) mindestens eine Aufnahme aufweist, in der der erste Absatz (5₁, 6₁) der Rückholfederklinge (5, 6) verankert ist.

4. Zapfen nach Anspruch 3, **dadurch gekennzeichnet, dass** die Aufnahme des dritten Teils (20) Mittel zum Führen des dazugehörenden Absatzes aufweist, die den Absatz von benachbarten Wänden der Aufnahme entfernt halten können, indem daher zwei parallele Kanäle definiert werden, die zu beiden Seiten des Absatzes angeordnet sind, wobei der Absatz in ein Klebeprodukt eingelassen ist.

5. Zapfen nach einem der vorhergehenden Ansprüche, **dadurch gekennzeichnet, dass** die Führungsmittel einen Schlitz (9) aufweisen, der die Aufnahme (7₁, 7₂; 8₂, 8₁) mit einer zylindrischen Innenfläche (12) der Achse (X) des Teils (1; 2; 20) verbindet, wobei der Schlitz (9) von dem Absatz durchquert ist und eine Breite im Wesentlichen gleich der Stärke des Absatzes aufweist.

6. Zapfen nach einem der vorhergehenden Ansprüche, **dadurch gekennzeichnet, dass** die Führungsmittel ferner eine Rille (10) aufweisen, die in einer Wand der Aufnahme (7₁, 7₂; 8₂, 8₁) gegenüber dem Schlitz (9) ausgebildet ist, um einen Endrand des Absatzes aufzunehmen und zu führen.

7. Zapfen nach einem der vorhergehenden Ansprüche, **dadurch gekennzeichnet, dass** die Kanäle (11a, 11b) zur Mittenebene des Absatzes symmetrisch sind und eine konstante Tiefe aufweisen.

8. Zapfen nach einem der vorhergehenden Ansprüche, bei dem die Aufnahme (7₁, 7₂; 8₂, 8₁) in einem Teil (1; 2; 20) ausgebildet ist, der sich axial zwischen zwei Basen erstreckt, **dadurch gekennzeichnet, dass** die Kanäle (11a, 11b) auf mindestens einer der Basen münden.

9. Zapfen nach einem der vorhergehenden Ansprüche, **dadurch gekennzeichnet, dass** das Klebeprodukt aus der wie folgt gebildeten Gruppe ausgewählt wird: die Epoxidharze, Acrylharze und Polyurethanharze.

10. Zapfen nach einem der vorhergehenden Ansprüche, **dadurch gekennzeichnet, dass** er zwei jeweils als "H" und als "O" ausgebildete Klingen derart aufweist, dass eine in die andere entlang von zwei Schnittebenen gefügt werden kann, die die Achse (X) des Zapfens bilden, wobei einer der Schenkel der Klinge in "H"-Form verkürzt ist, um sein Einfügen in die Klinge in "O"-Form zu erleichtern.

11. Zapfen nach einem der vorhergehenden Ansprüche, wobei Anspruch 2 gilt, **dadurch gekennzeichnet, dass** die Teile (1; 2) jeweils einen Steckteil (la; 2a) und einen Buchsenteil (1b; 2b) aufweisen, die derart benachbart sind, dass sie koaxial Kopf bei Fuß ineinander eingefügt werden können.

12. Zapfen nach Anspruch 11, **dadurch gekennzeichnet, dass** der Steckteil (1a; 1b) eines der zwei Teile (1; 2) und der Buchsenteil (2a; 2b) des anderen Teils komplementäre Anschlagflächen (3, 4; 3', 4') aufweisen, die das maximale winkelige Ausschlagen der zwei Teile (1; 2) zueinander einschränken.

13. Zapfen nach einem der vorhergehenden Ansprüche, wobei Anspruch 3 gilt, **dadurch gekennzeichnet, dass** der dritte Teil (20) mit dem ersten Teil (1) identisch ist.

14. Verfahren zum Herstellen des Zapfens nach einem der vorhergehenden Ansprüche, **dadurch gekennzeichnet, dass** man zum Verankern eines Klingenabsatzes (5₁, 6₁; 5₂, 6₂) in der dazugehörende Aufnahme (7₁, 7₂; 8₂, 8₁) den Absatz in die Aufnahme steckt und dann ein flüssiges, härtbares Klebeprodukt in die Kanäle (11a, 11b) derart gießt, dass man den Absatz in dem Klebeprodukt einlässt.

15. Vorrichtung, die eine Verkettung von mindestens zwei Zapfen nach einem der Ansprüche 1 bis 13 aufweist.
